# EUROPEAN PATENT APPLICATION

(11) **EP 1 293 913 A2**
(43) Date of publication of application: **19.03.2003**
(21) Application number: 02255306.9
(22) Date of filing: 30.07.2002
(51) Int. Cl.: G06F 17/30

(54) **Information retrieving method**

(30) Priority: 17.09.2001 JP 2001281106
(71) Applicant: Hitachi Ltd., Tokyo (JP)
(72) Inventor: Saito, Tsukasa, c/o Hitachi Ltd. Int. Prop. Group, Chiyoda-ku, Tokyo 100-8220 (JP); Miura, Nobuharu, c/o Hitachi Ltd. Int. Prop. Group, Chiyoda-ku, Tokyo 100-8220 (JP)
(74) Representative: Calderbank, Thomas Roger

(57) **Abstract**

A keyword-based information retrieving method which accepts a group of keywords entered from a user when the user makes a request for a search (501), sets a particular keyword within the group of keywords entered from the user as a main keyword (603, 704, 804), sets the remaining keywords other than the main keyword as additional keywords (604, 705, 805), modifies the additional keyword having a low relativity to the main keyword to a keyword having a high relativity (502, 605-610, 706-711, 806-811), and conducts a search requested by the user using the group of modified keywords (611, 712, 812).

## Description

The present invention relates to an information retrieving method, and more particularly, to an information retrieving method which can extract a proper keyword that has a high relativity to a group of ambiguous keywords set by a user.

Conventionally, for retrieving particular information such as a product name from an immense information source provided by the Internet, a user accesses a site which provides a search service, enters a keyword as information for requesting the search to a search engine in the site which responsively searches the information source for the information for retrieval to the user.

When the user searches the Internet, in which an immense amount of information is stored, for certain information as described above, it is not rare that several thousands to several tens of thousands of pieces of information are hit depending on an entered keyword. In this event, the user again enters another keyword to narrow down the search result, in which case the user must set an appropriate keyword for acquiring a desired search result in order to narrow down the search result.

Since it cannot be generally said which keyword is appropriate for retrieving particular information from an immense information source, a certain degree of mastery such as experience, techniques, and the like is required to the user for setting an appropriate keyword. If even one wrong keyword is mixed in a group of set keywords (those entered into a logical AND condition), the user fails to acquire an appropriate search result.

Also, when the user is not definite in contents (product name or the like) he wishes to search for, the setting of keyword is a difficult operation even for those who are familiar with personal computers. If the user sets ambiguous search conditions for an immense information source provided by the Internet, the user will encounter difficulties in retrieving desired information from the information source.

JP-A-2000-207422 describes a document retrieval and rating system and method which employ a concept thesaurus that can customize the rating of searches and search results. This system conducts a concept search directed to full texts within a document database (DB), rather than a search over the Internet.

Also, JP-A-7-141393 describes a keyword creating apparatus which efficiently revises and modifies search word candidates extracted from text data, and their readings to relieve a burden of creating keywords. This apparatus revises readings of keywords.

Since it cannot be generally said which keyword is appropriate for searching the conventional immense information source for particular information when a search directed to the immense information source is conducted to retrieve the particular information, the setting of search keywords appropriate for a search in such an information source is a difficult operation even for those who are familiar with personal computers. Thus, the user experiences a problem that he fails to acquire an appropriate search result if even one wrong keyword is mixed in a group of set keywords for a search.

It can therefore be said that in a search conducted in an immense information source provided by the Internet, the user will experience significant difficulties in retrieving pertinent product information if the user sets ambiguous search conditions without clearly identify appropriate keywords for acquiring a desired search result.

To address the above problem, it is desirable to provide a technique which is capable of conducting a desired search even with ambiguous request contents which can include a wrong keyword.

The present invention relates to an information retrieving method which modifies an additional keyword having a low relativity to a main keyword to a keyword having a high relativity which is then used for a search.

The information retrieving method according to the present invention first accepts a group of keywords entered from a user upon a request for a search for a product name or the like, sets a particular keyword within the group of keywords as a main keyword, sets the remaining keywords as additional keywords, and references a relation thesaurus indicating relativities between respective keywords to read a value indicative of the relativity of each additional keyword to the main keyword.

Next, the information retrieving method compares the read values with one another to select an additional keyword which has a low relativity to the main keyword, reads keywords having the same attribute as the additional keyword having a low relativity from an attribute table, extracts one having a high relativity from the read keywords, and modifies the additional keyword having the low relativity to the extracted keyword. Then, a search requested by the user is conducted using the group of modified keywords to present a search result to the user.

As described above, prior to a search, the information retrieving method according to the present invention selects an additional keyword having a low relativity to the main keyword, and modifies the additional keyword to a keyword having a high relativity extracted from keywords having the same attribute as the additional keyword, so that a search can be conducted for requested contents (product information or the like) based on a group of ambiguous keywords or partially wrong keywords set by the user.

As will be appreciated from the foregoing, the information retrieving method according to the present invention modifies an additional keyword having a low relativity to a main keyword to a keyword having a high relativity before conducting a search, so that it is possible to conduct an intended search even with ambiguous request contents which can include a wrong keyword.

Other objects, features and advantages of the invention will become apparent from the following description of the embodiments of the invention taken in conjunction with the accompanying drawings.

### In the drawings:

Fig. 1 is a diagram generally illustrating the configuration of an information retrieving system according to the present invention;
Fig. 2 is a block diagram generally illustrating the configuration of a search request information extracting device 100 in the present invention;
Fig. 3 shows an example of an attribute table within an extended thesaurus 208 according to the present invention;
Fig. 4 shows an example of a relation thesaurus within the extended thesaurus 208 according to the present invention;
Fig. 5 is a flow chart illustrating a processing procedure of whole search processing according to the present invention;
Fig. 6 is a flow chart illustrating a processing procedure of search processing which uses the most popular keyword as a main keyword in accordance with one embodiment of the present invention;
Fig. 7 is a flow chart illustrating a processing procedure of search processing which uses a keyword selected by the user as a main keyword in accordance with one embodiment of the present invention;
Fig. 8 is a flow chart illustrating a processing procedure of search processing which uses each of keywords as a main keyword in accordance with another embodiment of the present invention; and
Fig. 9 shows an exemplary display of a search result in the present invention.

In the following, description will be made on an information retrieving system according to one embodiment of the present invention which is configured to modify a group of ambiguous keywords, or a group of keywords, some of which are wrong, set by the user to conduct a search.

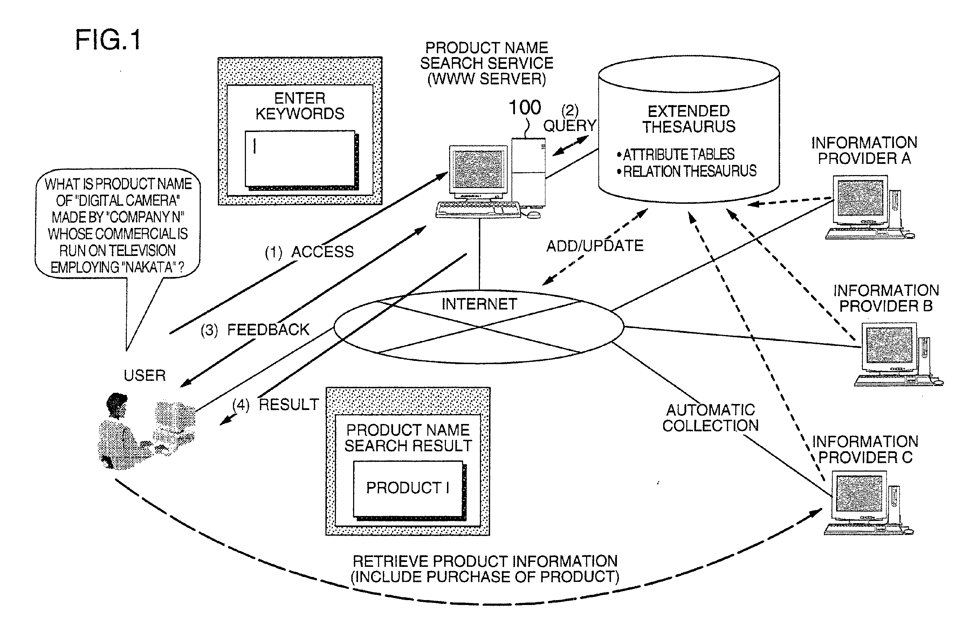

Fig. 1 generally illustrates the configuration of the information retrieving system according to this embodiment. Specifically, Fig. 1 generally illustrates a product name search service which accepts a search request from a processing apparatus of the user, which may include ambiguous contents or partially wrong contents, modifies the requested contents to appropriate request contents (keywords such as product information), and conducts a search for a product name.

For the modification of a wrong keyword to an appropriate keyword, the information retrieving system uses an extended thesaurus which is a combination of an attribute table that indicates attributes of keywords such as popularity, and a relation thesaurus that indicates the relativity between the attribute table and words. The extended thesaurus is built up as a whole by a method of automatically updating relativities of words from advertisements of products, news release, and the like, electronized for each field, and a method of manually registering words by a plurality of product information providers. In this manner, the extended thesaurus can be maintained as appropriate by the product information providers in such a form that reflects socially popular information, hot-selling commodities, and the like.

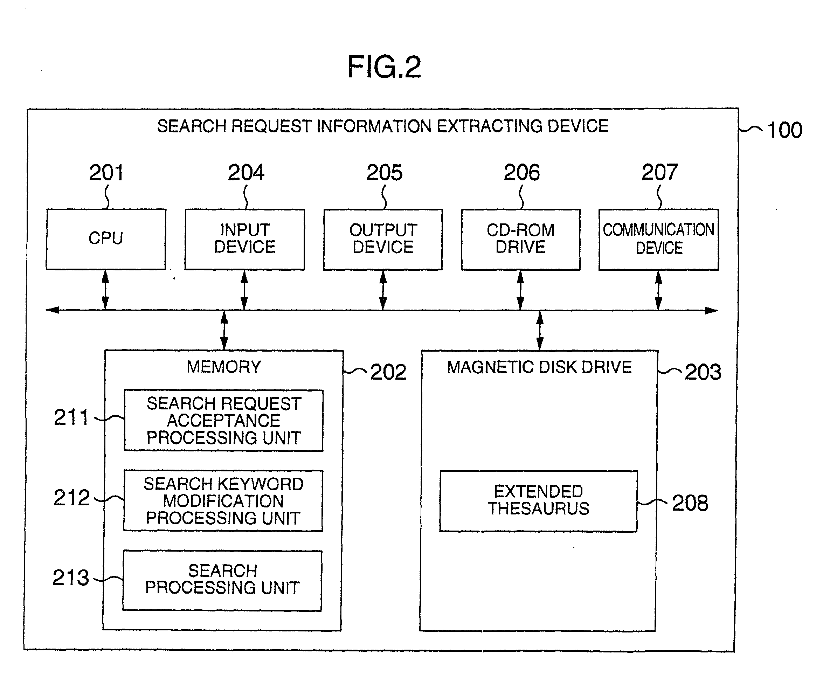

Fig. 2 generally illustrates the configuration of a search request information extracting device 100 according to this embodiment. As illustrated in Fig. 2, the search request information extracting device 100 in this embodiment comprises a CPU 201; a memory 202; a magnetic disk drive 203; an input device 204; an output device 205; a CD-ROM driver 206; a communication device 207; and an extended thesaurus 208.

The CPU 201 controls the general operation of the search request information extracting device 100. The memory 202 is loaded with a variety of processing programs and data for controlling the general operation of the search request information extracting device 100.

The magnetic disk drive 203 stores the variety of processing programs and data. The input device 204 is provided for the user to enter a group of ambiguous keywords or partially wrong keywords, set by the user, which are to be modified and used in a search.

The output device 205 provides a variety of outputs associated with the search. The CD-ROM drive 206 reads contents of a CD-ROM which records the variety of processing programs. The communication device 207 communicates with another processing apparatus through a network such as the Internet, an intranet, or the like.

The extended thesaurus 208 is a combination of attribute tables 300 which provide each of various words, which may be set as keywords, with attributes such as a category to which contents represented by the words belong, a popularity indicative of social notability, and the like, and a relation thesaurus 400 which indicates relativities between keywords within the attribute tables 300 and words.

The search request information extracting device 100 also comprises a search request acceptance processing unit 211; a search keyword modification processing unit 212; and a search processing unit 213.

The search request acceptance processing unit 211 accepts a group of keywords entered by the user upon request for a search. The search keyword modification processing unit 212 sets a particular keyword within the group of keywords entered by the user as a main keyword, sets the remaining keywords as additional keywords, and modifies any additional keyword which has a low relativity to the main keyword to a keyword having a high relativity. The search processing unit 213 conducts a search requested by the user using the group of keywords which have been modified.

A program for causing the search request information extracting device 100 to function as the search request acceptance processing unit 211, search keyword modification processing unit 212, and search processing unit 213 is recorded on a recording medium such as a CD-ROM, stored in a magnetic disk drive or the like, and loaded into a memory for execution. The recording medium which records the program may be any recording medium other than the CD-ROM. Alternatively, the program may be installed into an information processing apparatus from the recording medium, or may be used by accessing the recording medium through a network.

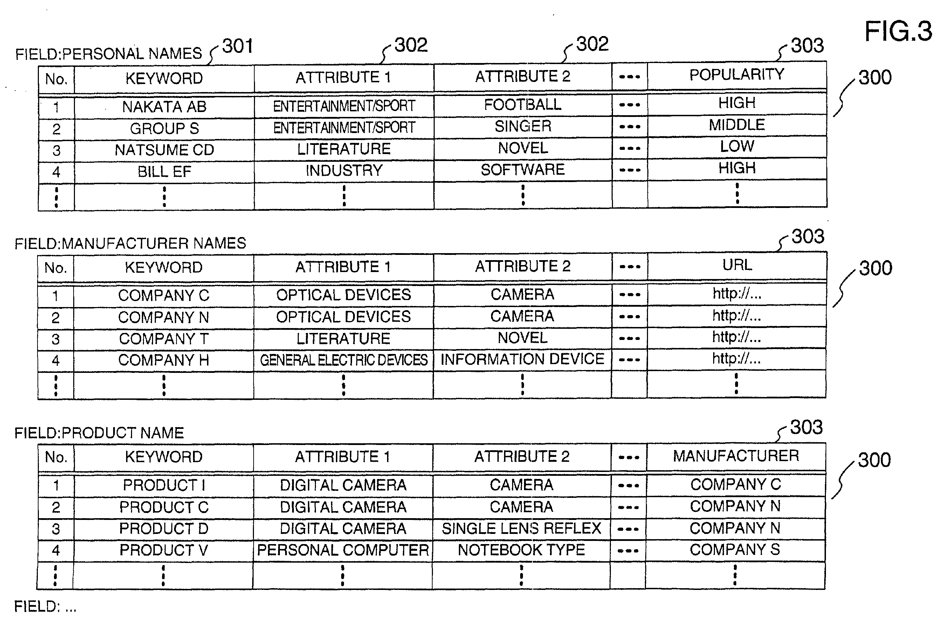

Fig. 3 shows an example of the attribute tables 300 within the extended thesaurus 208 in the embodiment of the present invention. As shown in Fig. 3, each attribute table 300 in this embodiment comprises a keyword 301; an attribute 302; a popularity 303; a URL 304; and a manufacturer 305.

The keyword 301 is information indicative of a proper noun in each field such as a personal name, a manufacturer name, and a product name. The attribute 302 is information indicative of a category to which the keyword 301 belongs. The popularity 303 is information indicative of a social notability of the keyword 301.

The URL 304 is information indicative of the address of a home page associated with the keyword 301. The manufacturer 305 is information indicative of the manufacturer which manufactures a product indicated by the keyword 301.

As shown in Fig. 3, each of the attribute tables 300 within the extended thesaurus 208 stores for proper nouns in each field such as a personal name, a manufacturer name, or a product name, information such as the keyword 301; an attribute 1 and an attribute 2 indicative of a category to which the keyword 301 belongs; the popularity 303 of the keyword 301; the URL (Uniform Resource Locators) 304 of a home page associated with the keyword 301; the manufacturer 305 of the product indicated by the keyword 301; and the like.

The popularity 303 used herein is a value indicative of a social notability of the keyword 301, and is set to a value such as "high," "middle," or "low" depending on the notability. Additionally, the attribute table 300 may have been provided for words other than proper nouns in fields other than those shown in Fig. 3.

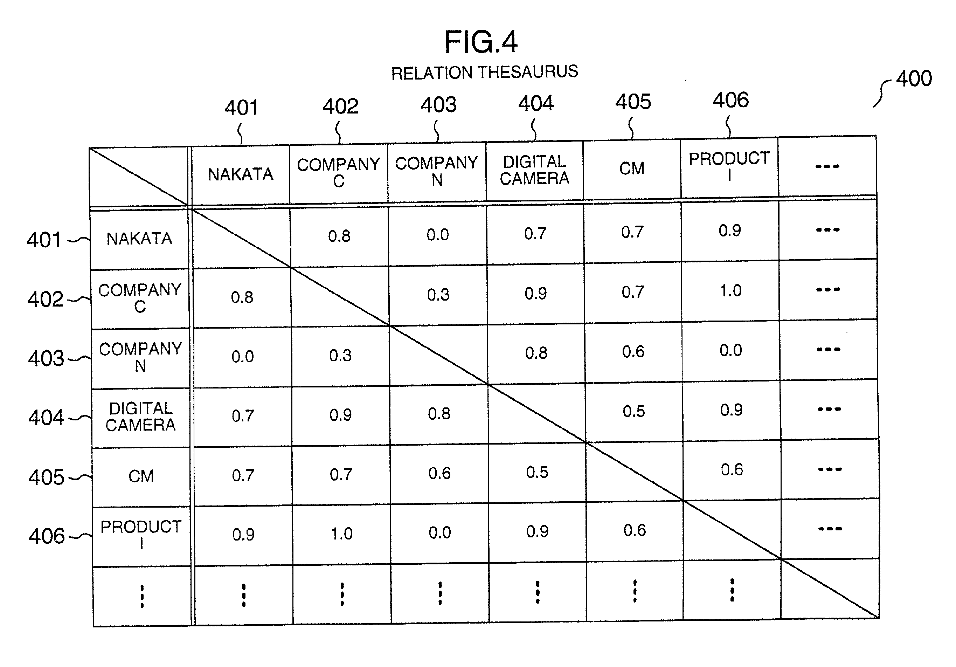

Fig. 4 shows an example of the relation thesaurus 400 within the extended thesaurus 208. As shown in Fig. 4, the relation thesaurus 400 within the extended thesaurus 208 stores keywords 401 - 406 which are equal to keywords 301 within the attribute tables 300, i.e., proper nouns in each field such as personal names, manufacturer names, and product names; and values in a range of 0.0 to 1.0 indicative of the relativities between these keywords. A larger value indicates a higher relativity.

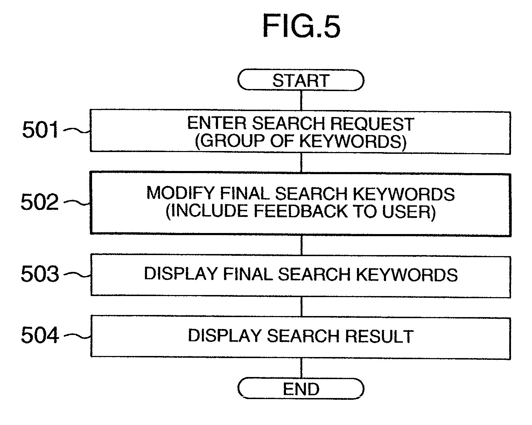

Fig. 5 is a flow chart illustrating a processing procedure of whole search processing. The user enters a group of keywords into the processing apparatus of the user as initial conditions, and accesses the search request information extracting device 100, which operates as a WWW server, through the Internet to transmit the group of keywords to the search request information extracting unit 100.

As illustrated in Fig. 5, at step 501, the search request acceptance processing unit 211 of the search request information extracting device 100 receives and accepts the group of keywords entered by the user upon request for a search from the processing apparatus of the user.

Next, at step 502, the search keyword modification processing unit 212 of the search request information extracting device 100 sets a particular keyword within the group of keywords entered by the user as a main keyword, sets the remaining keywords as additional keywords, and modifies any additional keyword, which has a low relativity to the main keyword, to a keyword having a high relativity. Then, at step 503, the search keyword modification processing unit 212 transmits the group of modified keywords to the processing apparatus of the user for display.

At step 504, the search processing unit 213 conducts a search requested by the user using the group of modified keywords to acquire a search result such as a product name and the like which is transmitted to the processing apparatus of the user for display to the user.

In addition, the search keyword modification processing unit 212 may set a main keyword at step 502 by conducting a user feedback for accepting a selection by the user to set the main keyword with an improved accuracy. Also, at step 504, the search processing unit 213 may determine a final search result from search results which are acquired when the respective keywords are designated one by one as a main keyword, by conducting a user feedback for accepting a selection by the user, to improve a search accuracy.

In this embodiment, the execution procedure is classified into the following three patterns depending on the presence or absence of the user feedback in a search, or a timing at which the user feedback is conducted.
* Pattern 1: The search keyword modification processing unit 212 determines a main keyword in accordance with the popularity of keyword without conducting the user feedback. This processing pattern can alleviate the user's burden and automate the selection of a main keyword.
* Pattern 2: The search keyword modification processing unit 212 determines main keyword candidates from a group of keywords, and presents a list of the main keyword candidates to the user to select a main keyword which fits the purpose of the user. This processing pattern can reduce noise information which could be retrieved when a main keyword selected by the search keyword modification processing unit 212 is different from a main keyword intended by the user.
* Pattern 3: The search keyword modification processing unit 212 determines main keyword candidates from a group of keywords, and presents a list of search results acquired by using the respective candidates, so that the user can select a search result which fits the user's purpose. This processing pattern can prevent search slips by providing the user with similar information retrieved with the respective main keyword candidates.

In the following, description will be made on each of the processing procedures in the three patterns for accepting a group of ambiguous keywords or partially wrong keywords set by the user, and searching for pertinent information.

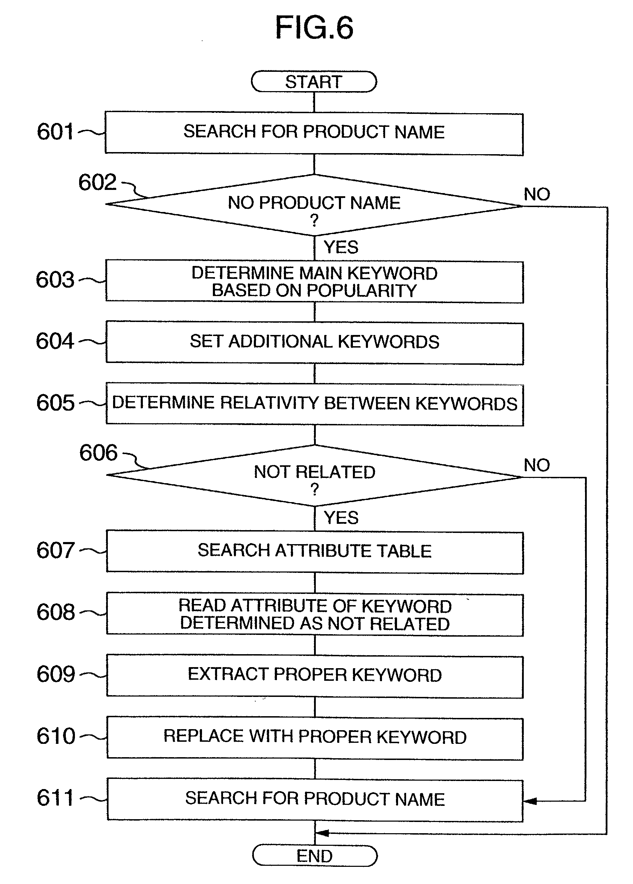

Fig. 6 is a flow chart illustrating a processing procedure of a search which is conducted using the keyword having the highest popularity as a main keyword. For example, when the user wishes to purchase a digital camera, a commercial of which is run on the television, in which a football player Nakata is employed, the user may enter four keywords "Nakata," "CM" (commercial), "Company N," and "digital camera" into the processing apparatus of the user as a group of keywords which present initial conditions, and accesses the search request information extracting apparatus 100, which operates as a WWW server, through the Internet to transmit a search request for a product name based on the group of keywords to the search request information extracting apparatus 100.

As illustrated in Fig. 6, at step 601, the search request acceptance processing unit 211 of the search request information extracting device 100 receives and accepts the group of keywords entered by the user upon request for the search from the processing apparatus of the user, and searches the product name attribute table 300 within the extended thesaurus 208 to see whether the received keywords include a product name.

At step 602, the search request acceptance processing unit 211 examines the result of the search for a product name in the keywords entered by the user. The flow proceeds to step 603 if no product name is included in the keywords, whereas the processing is terminated when the product name is included in the keywords, since the product name, which is to be found, is already included in the keywords. In the foregoing example, since the product name is not included in the keywords entered by the user, the flow proceeds to step 603. When a search is conducted even if a product name is included in the keywords, such as when the keywords include another product name other than that requested for a search, the flow may proceed to step 603, omitting the search for a product name.

Next, at step 603, the search keyword modification processing unit 212 references the attribution table 300 within the extended thesaurus 208 to compare one keyword with another in popularity within the keywords entered by the user, and sets the keyword having the highest popularity as a main keyword. In this event, the comparison of the popularity may be made only for proper nouns on the assumption that proper nouns are likely to be main keywords. The search keyword modification processing unit 212 treats those keywords which have no popularity set therefor as keywords having the lowest popularity. In the foregoing example, when "Nakata" is the surname of a sport player (football player), "Nakata" is set as a main keyword since "Nakata" is assumed to have the highest popularity of the keywords entered by the user.

As step 604, the search keyword modification processing unit 212 sets the remaining keywords other than that set as the main keyword as additional keywords. In the foregoing example, "CM," "Company N," and "digital camera" are set as additional keywords.

At step 605, the search keyword modification processing unit 212 references the relation thesaurus 400 within the extended thesaurus 208 to read the value indicative of the relativity of each additional keyword to the main keyword, and determines the relativity between the main keyword and each additional keyword. In the foregoing example, the relativities of the respective keywords "CM," "Company N," and "digital camera" to the main keyword "Nakata" are 0.7, 0.0, 0.7, respectively, from the values in Fig. 4. Assuming, for example, that a keyword having a value less than 0.5 is determined as not related, the additional keyword "Company N" is not related to the main keyword "Nakata" and is determined as a "wrong keyword." The values indicative of the relativities of the respective keywords in Fig. 4 in this embodiment are set on the assumption that the digital camera, the commercial of which is run on the television with the player Nakata is a product of Company C.

At step 606, the search keyword modification processing unit 212 references the result of determination, and the flow proceeds to step 607 if an additional keyword determined as not related is included in the keywords, and proceeds to step 611 when no additional keyword determined as not related is included in the keywords. In the foregoing example, since the keywords entered by the user include the additional keyword "Company N" determined as not related, the flow proceeds to step 607.

At step 607, the search keyword modification processing unit 212 references the attribute table 300 within the extended thesaurus 208 to search the attribute table 300 for records which correspond to the additional keyword determined as not related in the determination of the relativity. At step 608, the search keyword modification processing unit 212 reads attribute information of the additional keyword determined as not related from the retrieved records of the attribute table 300. In the foregoing example, the additional keyword "Company N" determined as not related is stored in the manufacturer attribute table 300, and its attribute 1 indicates "optical device," so that this attribute information is read from the manufacturer attribute table 300.

At step 609, the search keyword modification processing unit 212 searches the attribute table 300 using the read attribute information as a key to retrieve keywords which match the attribute information from the attribute table 300, references the relation thesaurus 400 within the extended thesaurus 208 to examine the values indicative of the relativities of the keywords to the main keyword, and extracts one having a high relativity to the main keyword as a proper keyword.

At step 610, the search keyword modification processing unit 212 modifies the additional keyword determined as not related in the determination of the relativity to the proper keyword, and transmits the modified keywords to the processing apparatus of the user for presentation to the user.

In the foregoing example, keywords with "optical device" set in the attribute 1 within the manufacturer attribute table 300 are "Company C" and "Company N" which have the relativities 0.8 and 0.0, respectively, to the main keyword "Nakata" so that "Company C" is extracted as a proper keyword, and "Company N" within the keywords entered by the user is replaced with "Company C."

At step 611, the search processing unit 213 conducts a search for a product name requested by the user using the keywords. Specifically, the search processing unit 213 references the relation thesaurus 400 within the extended thesaurus 208 to extract words related to each of the keywords, and picks up from the words related to all of the keywords, those which match keywords in the product name attribute table 300 within the extended thesaurus 208, as a search result. Then, search request information extracting device (WWW server) 100 transmits the acquired search result to the processing apparatus of the user for presentation to the user.

In the foregoing example, the search processing unit 213 retrieves a product name "product 1" which is related to the modified keywords "Nakata," "CM," "digital camera," and "Company C" and matches a keyword in the product name attribute table 300, and presents this search result to the user.

In the search processing at step 611, the search processing unit 213 may conduct a conventional search for a product name using "Nakata," "CM," "digital camera," and "Company C" as keys, without using the relation thesaurus 400. Alternatively, the search processing unit 213 may conduct a search for other information than a product name.

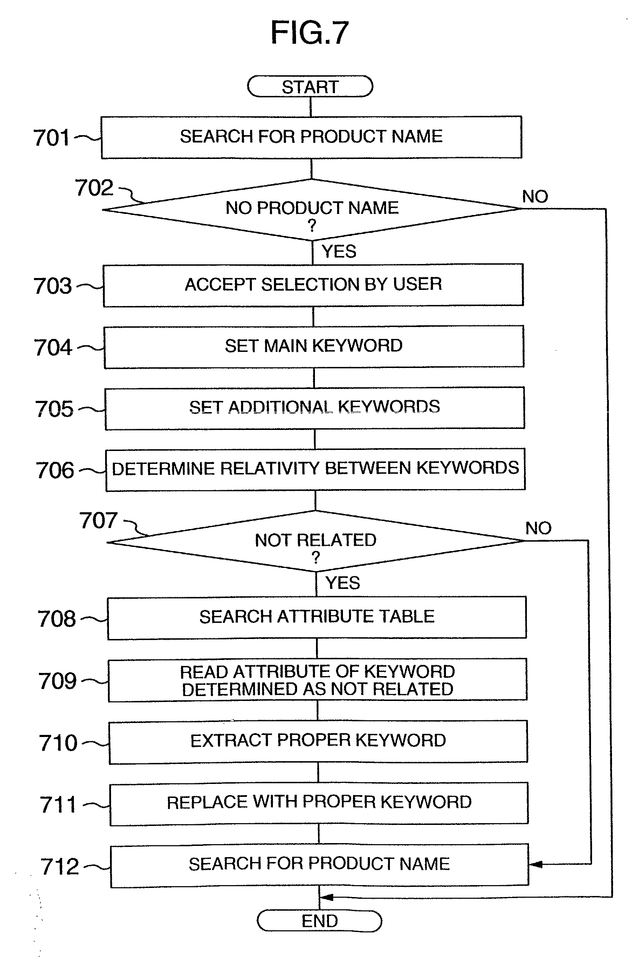

Fig. 7 is a flow chart illustrating a processing procedure of a search which is conducted using a keyword selected by the user as a main keyword. As illustrated in Fig. 7, at step 701, the search request acceptance processing unit 211 of the search request information extracting device 100 receives and accepts a group of keywords entered by the user upon request for a search from the processing apparatus of the user, and then references the product name attribute table 300 within the extended thesaurus 208 to see whether any product name is included in the received keywords.

At step 702, the search request acceptance processing unit 211 examines the result of the search for a product name in the keywords entered by the user. The flow proceeds to step 703 if no product name is included in the keywords, whereas the processing is terminated when the product name is included in the keywords.

Next, at step 703, the search keyword modification processing unit 212 presents each of the keywords to the user, and accepts a selection of the keyword, made by the user, which seems to be most related to an intended product. In this event, the search keyword modification processing unit 212 may presents only proper nouns such as "Nakata" and "Company N" to the user on the assumption that proper nouns are likely to be main keywords.

At step 704, the search keyword modification processing unit 212 sets the keyword selected by the user as a main keyword. In the foregoing example, when the user selects "Nakata" which is set as the main keyword, the subsequent processing is identical to Fig. 6. Assume herein that the user selects "Company N" so that the search keyword modification processing unit 212 sets "Company N" as the main keyword.

At step 705, the search keyword modification processing unit 212 sets the remaining keywords other than that set as the main keyword as additional keywords. In the foregoing example, "Nakata," "CM," and "digital camera" are set as additional keywords.

At step 706, the search keyword modification processing unit 212 references the relation thesaurus 400 within the extended thesaurus 208 to read the value indicative of the relativity of each additional keyword to the main keyword, and determines the relativity of each additional keyword to the main keyword.

In the foregoing example, the relativities of the respective additional keywords "Nakata," "CM," and "digital camera" to the main keyword "Company N" are 0.0, 0.6, 0.8, respectively, from the values in Fig. 4, so that the search keyword modification processing unit 212 determines the additional keyword "Nakata" as a "wrong keyword" since it is not related to the main keyword "Company N."

At step 707, the search keyword modification processing unit 212 references the result of determination, and the flow proceeds to step 708 when any additional keyword determined as not related is included in the keywords, and proceeds to step 712 when no additional keyword determined as not related is included in the keyword. In the foregoing example, since the additional keyword "Nakata" determined as not related is included in the keywords entered by the user, the flow proceeds to step 708.

At step 708, the search keyword modification processing unit 212 searches the attribute table 300 within the extended thesaurus 208 for records in the attribute table 300, corresponding to the additional keyword which is determined as not related in the determination of the relativity. At step 709, the search keyword modification processing unit 212 reads attribute information of the additional keyword determined as not related from records retrieved from the attribute table 300. In the foregoing example, the additional keyword "Nakata" determined as not related is stored in the personal name attribute table 300 with its attribute 1 set to "entertainment/sport" so that this attribute information is read from the personal name attribute table 300.

At step 710, the search keyword modification processing unit 212 searches the attribute table 300 using the read attribute information as a key to retrieve keywords which match the attribute information from the attribute table 300, references the relation thesaurus 400 within the extended thesaurus 208 to read the values indicative of the relativities of the keywords to the main keyword, and extracts one having a high relativity to the main keyword as a proper keyword.

At step 711, after the search keyword modification processing unit 212 modifies the additional keyword determined as not related in the determination of the relativity to the proper keyword, and the search request information extracting device (WWW server) 100 transmits the modified keywords to the processing apparatus of the user for presentation to the user.

In the foregoing example, keywords with "entertainment/sport" set in the attribute 1 are "Nakata" and "Group S." Assuming that "Group S" has a higher relativity to the main keyword "Company N" than "Nakata," "Group S" is extracted as a proper keyword, and "Nakata" within the keywords entered by the user is replaced with "Group S."

At step 712, the search processing unit 213 conducts a search for a product name requested by the user using the keywords. Specifically, the search processing unit 213 references the relation thesaurus 400 within the extended thesaurus 208 to extract words related to each of the keywords, and picks up from the words related to all of the keywords, those which match keywords in the product name attribute table 300 within the extended thesaurus 208, as a search result. Then, search request information extracting device (WWW server) 100 transmits the acquired search result to the processing apparatus of the user for presentation to the user.

In the foregoing example, the search processing unit 213 retrieves, for example, a product name "Product C" which is related to the modified keywords "Group S," "CM," "digital camera," and "Company N" and matches a keyword in the product name attribute table 300, and presents this search result to the user.

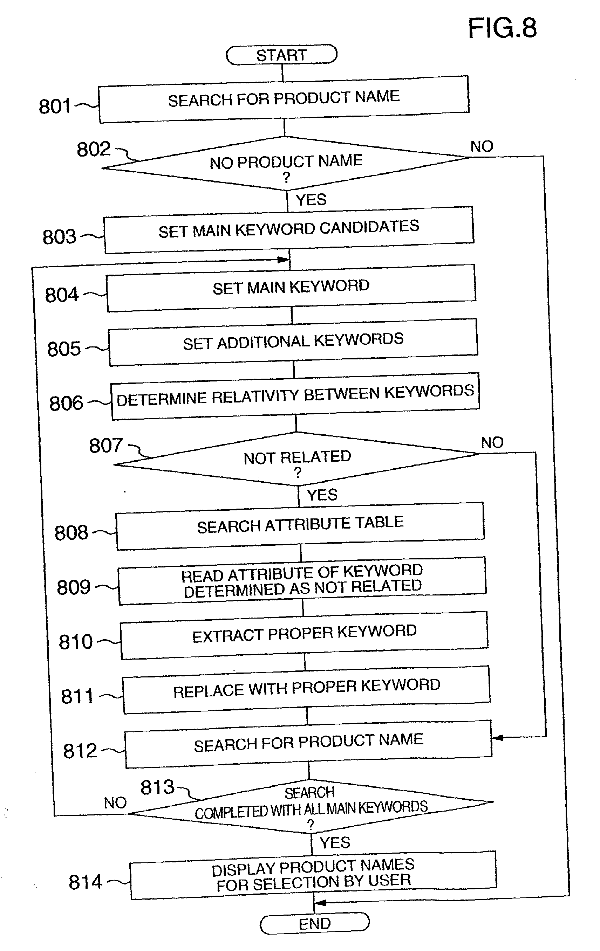

Fig. 8 is a flow chart illustrating a processing procedure of a search which is conducted using each of keywords as a main keyword in accordance with this embodiment. As illustrated in Fig. 8, at step 801, the search request acceptance processing unit 211 of the search request information extracting device 100 receives and accepts a group of keywords entered by the user upon request for a search from the processing apparatus of the user, and then references the product name attribute table 300 within the extended thesaurus 208 to see whether any product name is included in the received keywords.

At step 802, the search request acceptance processing unit 211 examines the result of the search for a product name in the keywords entered by the user. The flow proceeds to step 803 if no product name is included in the keywords, whereas the processing is terminated when the product name is included in the keywords.

Next, at step 803, the search keyword modification processing unit 212 sets the keywords in the group as main keyword candidates. In this event, the search keyword modification processing unit 212 may set only proper nouns such as "Nakata" and "Company N" as candidates on the assumption that proper nouns are likely to be main keywords.

At step 804, the search keyword modification processing unit 212 sets one of the keywords chosen as the candidates as a main keyword. For example, when "Nakata" and "Company N" are chosen as candidates, the search keyword modification processing unit 212 sets "Nakata" as the main keyword in the first loop, and sets "Company N" as the main keyword in the next loop.

At step 805, the search keyword modification processing unit 212 sets the remaining keywords other than that set as the main keyword as additional keywords. For example, when "Nakata" is chosen as the main keyword, "CM," "Company N," and "digital camera" are set as additional keywords. On the other hand, when "Company N" is chosen as the main keyword, "Nakata," "CM," and "digital camera" are set as additional keywords.

At step 806, the search keyword modification processing unit 212 references the relation thesaurus 400 within the extended thesaurus 208 to read the value indicative of the relativity of each additional keyword to the main keyword, and determines the relativity of each additional keyword to the main keyword.

At step 807, the search keyword modification processing unit 212 references the result of determination, and the flow proceeds to step 808 when any additional keyword determined as not related is included in the keywords, and proceeds to step 812 when no additional keyword determined as not related is included in the keywords.

At step 808, the search keyword modification processing unit 212 searches the attribute table 300 within the extended thesaurus 208 for records in the attribute table 300, corresponding to the additional keyword which is determined as not related in the determination of the relativity. At step 809, the search keyword modification processing unit 212 reads attribute information of the additional keyword determined as not related from records retrieved from the attribute table 300.

At step 810, the search keyword modification processing unit 212 searches the attribute table 300 using the read attribute information as a key to retrieve keywords which match the attribute information from the attribute table 300, references the relation thesaurus 400 within the extended thesaurus 208 to read the values indicative of the relativities of the keywords to the main keyword, and extracts one having a high relativity to the main keyword as a proper keyword.

At step 811, after the search keyword modification processing unit 212 modifies the additional keyword determined as not related in the determination of the relativity to the proper keyword, and the search request information extracting device (WWW server) 100 transmits the modified keywords to the processing apparatus of the user for presentation to the user.

At step 812, the search processing unit 213 conducts a search for a product name requested by the user using the keywords. Specifically, the search processing unit 213 references the relation thesaurus 400 within the extended thesaurus 208 to extract words related to each of the keywords, and picks up from the words related to all of the keywords, those which match keywords in the product name attribute table 300 within the extended thesaurus 208, as a search result.

At step 813, the search processing unit 213 examines whether or not the search has been conducted for all the main keyword candidates. The flow proceeds to step 814 when the search is completed for all the main keyword candidates, and returns to step 803, when not completed, to conduct a search for a next candidate.

At step 814, the search request information extracting device (WWW server) 100 transmits a plurality of the search results acquired in the foregoing search to the processing apparatus of the user for presentation to the user. A search result selected by the user is determined as a final search result. For example, the search request information extracting device 100 presents the user with "Product C" retrieved when "Nakata" is chosen as the main keyword, and "product 1" retrieved when "Company N" is chosen as the main keyword, and a product name selected by the user is determined as the final search result.

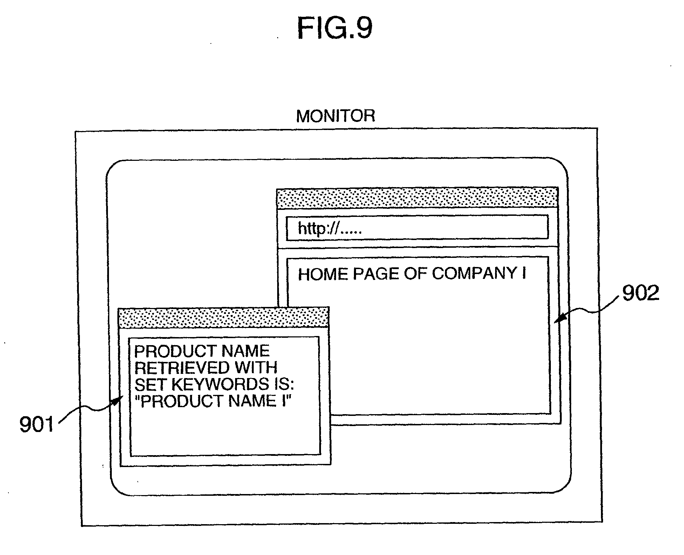

Fig. 9 shows an exemplary display of a search result in this embodiment. As shown in Fig. 9, when product information is established by the search conducted in accordance with the foregoing embodiment, the search result is displayed in a product name search result 901. A home page which provides information on the product may be simultaneously displayed on a Web browser 902.

Specifically, the search processing unit 213 of the search request information extracting device 100 retrieves the manufacturer 305 of the product, the product name of which was searched for, from the product name attribute table 300, retrieves the URL 304 of the manufacturer 305 from the manufacturer attribute table 300 to create an HTML page for accessing a top page of the manufacturer which sells the product, and transmits the HTML page to the processing apparatus of the user.

When the manufacturer does not provide a home page, a request for a search may be made to an existing search engine to display a URL list (search result) of home pages which present pertinent information.

As described above, the information retrieving system according to one embodiment of the present invention conducts a search after an additional keyword having a low relativity to a main keyword is modified to a keyword having a high relativity, so that the information retrieving system can conduct a search intended by the user-even with ambiguous request contents which may include wrong keywords.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. An information retrieving method for retrieving information using keywords, comprising the steps of:
accepting a group of keywords entered from a user when the user makes a request for a search (501);
setting a specified keyword within the group of keywords entered from the user as a main keyword (603, 704, 804);
setting the remaining keywords other than said main keyword as additional keywords (604, 705, 805);
modifying said additional keyword having a low relativity to said main keyword to a keyword having a high relativity (502, 605-610, 706-711, 806-811); and
conducting a search requested by the user using the group of modified keywords (611, 712, 812).

2. An information retrieving method according to claim 1, wherein said step of setting a main keyword includes selecting a keyword having the highest popularity (303) indicative of a social notability from among the group of keywords entered from the user as the main keyword (603).

3. An information retrieving method according to claim 1, wherein said step of setting a main keyword includes setting a keyword selected by the user from the group of keywords entered from the user as the main keyword (703).

4. An information retrieving method according to claim 1, further comprising the steps of:
setting each keyword in the group of keywords entered from the user as a main keyword (804);
conducting a search with each said keyword (812);
presenting a plurality of search results (814); and
determining a search result selected by the user from the plurality of search results as a final search result (814).

5. An information retrieving system for retrieving information using keywords, comprising:
a search request acceptance processing unit (211) for accepting a group of keywords entered from a user when the user makes a request for a search;
a search keyword modification processing unit (212) for setting a particular keyword within the group of keywords entered from the user as a main keyword, setting the remaining keywords other than said main keyword as additional keywords, and modifying said additional keyword having a low relativity to said main keyword to a keyword having a high relativity; and
a search processing unit (213) for conducting a search requested by the user using the group of modified keywords.

6. An information retrieving system according to claim 5, wherein said search keyword modification processing unit selects a keyword having the highest popularity (303) indicative of a social notability from among the group of keywords entered from the user as the main keyword.

7. An information retrieving system according to claim 5, wherein said search keyword modification processing unit sets a keyword selected by the user from the group of keywords entered from the user as the main keyword.

8. An information retrieving system according to claim 5, wherein:
said search keyword modification processing unit sets each keyword in the group of keywords entered from the user as a main keyword; and
said search processing unit conducts a search with each said keyword, presents a plurality of search results, and determines a search result selected by the user by the plurality of search results as a final search result.

9. An information retrieving program for executing an information retrieving system to retrieve information using keywords, said program causing a computer to function as:
a search request acceptance processing unit (211) for accepting a group of keywords entered from a user when the user makes a request for a search;
a search keyword modification processing unit (212) for setting a particular keyword within the group of keywords entered from the user as a main keyword, setting the remaining keywords other than said main keyword as additional keywords, and modifying said additional keyword having a low relativity to said main keyword to a keyword having a high relativity; and
a search processing unit (213) for conducting a search requested by the user using the group of modified keywords.

10. An information retrieving program according to claim 9, wherein said program causes the computer, functioning as said search keyword modification processing unit, to select a keyword having the highest popularity (303) indicative of a social notability from among the group of keywords entered from the user as the main keyword.

11. An information retrieving program according to claim 9, wherein said program causes the computer, functioning as said search keyword modification processing unit, to set a keyword selected by the user from the group of keyword entered from the user as the main keyword.

12. An information retrieving program according to claim 9, wherein said program causes the computer, functioning as said search keyword modification processing unit, to set each keyword in the group of keywords entered from the user as the main keyword, and causes the computer, functioning as said search processing unit, to conduct a search with each said keyword, present a plurality of search results, and determine a search result selected by the user from the plurality of search results as a final search result.
